# EUROPEAN PATENT SPECIFICATION

(11) **EP 3 129 223 B1**
(45) Date of publication and mention of the grant of the patent: **25.11.2020**
(21) Application number: 15777583.4
(22) Date of filing: 08.04.2015
(51) Int. Cl.: B32B 27/40, B32B 27/00, B32B 27/16, B32B 27/20, B32B 38/14

(54) **PANEL FOR HOME APPLIANCE AND MANUFACTURING METHOD THEREOF**
PLATTE FÜR HAUSHALTSVORRICHTUNG UND HERSTELLUNGSVERFAHREN DAFÜR
PANNEAU POUR APPAREIL MÉNAGER ET SON PROCÉDÉ DE FABRICATION

(30) Priority: 10.04.2014 KR 20140043259
(43) Date of publication of application: 15.02.2017
(73) Proprietor: LG Electronics Inc., Seoul 07336 (KR)
(72) Inventor: LIM, Jonghun, Seoul 153-802 (KR); KIM, Joonbeom, Seoul 153-802 (KR); JUNG, Dongju, Seoul 153-802 (KR)
(74) Representative: Ter Meer Steinmeister & Partner
(86) International application number: PCT/KR2015/003504
(87) International publication number: WO 2015/156594

(56) References cited:
- WO-A1-03/001546
- US-A1- 2003 150 699
- US-A1- 2006 075 917
- US-A1- 2006 075 917
- US-A1- 2010 270 189
- US-A1- 2010 294 426
- US-A1- 2012 251 779

## Description

### Technical Field

The present disclosure relates to a panel for a home appliance and a manufacturing method thereof, and particularly to, a panel for home appliance and a manufacturing method thereof capable of improving chemical resistance of a printed layer and productivity thereof.

### Background Art

In general, home appliances, such as washing machines, refrigerators, and air conditioners, have panels defining appearances thereof, on which various letters or symbols are printed. Through such letters and symbols, information on use and operation is transferred in an intuitively identifiable manner so as to enable an easy operation.

In order to express such figures or letters, a configuration in which letters of symbols are directly printed on the display panel of a washing machine to provide information for operation, and a configuration in which a print film, on which letters of symbols are printed, is attached to the display panel of a washing machine are respectively disclosed in Korean Patent Application Publication No. 10-2004-0006271 and Korean Patent Application Publication No. 10-2004-0006273.

Particularly, in the case of a print film, a method is disclosed in which a pre-printed film is inserted into a mold, and is then integrally molded together with a portion of a display panel through insert injection-molding.

In such related arts, letters or symbols are printed on the plastic molded product itself or on the base of a print film, and a printing method using a solvent-type ink in which printing is performed by a chemical reaction with materials is widely used.

In addition, recently, surfaces of injection-molded parts are also coated to improve appearances of panels of home appliances. Particularly, the surfaces of injection-molded parts are also coated by using solvent-type paint, thereby protecting the surfaces of injection-molded parts and providing effects of diverse color variation and a metallic texture.

However, a control panel, on which printing is performed by using solvent-type ink as described above, has limitations in that a manufacturing time becomes longer because it takes a relatively long time for a complete curing, the control panel is weak in a scratch, and has insufficient chemical resistance.

Particularly, in the case of a washing machine, there is a limitation in that the printed letters or symbols are often erased when being exposed to chemical materials like detergent. Also, for home appliances other than a washing machine, there is a limitation in that the printed letters of symbols are easily erased when being exposed to chemical agents during a cleaning work, etc.

WO 03/001546 A1 describes a control panel assemble for home appliances devised for a better external appearance and more stable operation is disclosed. The control panel assembly includes a substrate provided with at least one switch for operating home appliance and at least one display element for displaying the operation state, an external film configured to make it possible for user to access to the switch and the display element, and a control panel allowing the substrate 40 to be installed therein, the control panel injection-molded to be inserted in the external film and integrated with the external film.

US 2006/075917 A1 describes a printing method including steps of applying an ink-receptive coating to a substrate; printing an actinic radiation-curable ink jet ink over the coating; and curing the printed ink jet ink. An article printed by the method has a ink-receptive coating layer with a cured print. An apparatus for carrying out the method includes a coating station at which the ink-receptive coating is applied to a substrate, an ink jet printhead at which the energy-curable ink jet ink is applied, and a source of actinic radiation for curing the applied ink. The ink may be applied in sufficient amount to achieve a color density comparable to that obtained using other printing processes such as flexographic or gravure printing processes. The ink-receptive coating layer may be of a thickness sufficient to provide improve surface smoothness and/or reduced drop spread relative to an uncoated substrate.

### Disclosure of Invention

### Technical Problem

Embodiments provide a panel for a home appliance and a manufacturing method thereof, in which a manufacturing time is reduced and chemical resistance is improved in such a way that a urethane coated layer is formed by using solvent-type urethane paint on a surface of an injection-molded part defining a portion of an appearance of a home appliance; and a printed layer is formed on the urethane coated layer by printing letters and symbols using a UV printing ink which may be cured through a cationic curing method.

### Solution to Problem

The object is solved by the features of independent claims.

In one embodiment, a panel for a home appliance, which defines an appearance of the home appliance, includes: an injection-molded part formed of a plastic material by injection-molding to define a shape of the panel; a urethane coated layer disposed on a surface of the injection-molded part and formed by solvent-type paint to define an exterior of a panel of the home appliance; and a printed layer disposed on a surface of the urethane coated layer and formed by being printed by using a UV printing ink which includes a monomer and an oligomer, a photoinitiator, and a pigment, and may be cured through a cationic curing method.

The printed layer may include letters and symbols for assisting in controlling and checking operation states of the home appliance.

The solvent-type urethane paint may include any one of melamine, alkyd, and acryl. The UV printing ink may further include a curing accelerator, an anti-forming agent, a dispersing agent, and silica.

The UV printing ink may have a pigment content which is determined in a range such that a color of the urethane coated layer may be hidden, and ultraviolet light irradiated for curing may transmits the UV printing ink.

The UV printing ink may include, based on the total weight of the ink, about 10 wt% to about 25 wt% of the monomer, about 25 wt% to about 50 wt% of the oligomer, about 4.5 wt% to about 5.5 wt% of the photoinitiator, about 4 wt% to 6 wt% of the curing accelerator, about 0.1 wt% of the anti-foaming agent, about 1 wt% of the dispersing agent, about 8 wt% to 13 wt% of the silica, and the balance being the pigment.

The monomer and oligomer may include epoxy-based resin.

The photoiniator may be a phosphoric acid-based or an iodine-based material.

In another embodiment, a manufacturing method of a panel of a home appliance, includes: an injection-molding process of forming an injection-molded part of a plastic material, which forms a panel defining at least a portion of an appearance of a home appliance; a urethane coating process of forming a urethane coated layer by using solvent-type urethane paint on a surface of the injection-molded part to form an exterior of the panel; a printing process of printing letters and symbols through a silk screen printing method on a surface of the urethane coated layer by using a UV printing ink which includes a monomer and an oligomer, a photoinitiator, and a pigment; and a curing process of curing the UV printing ink through a cationic curing method, by allowing the panel, on which a printed layer is formed by printing letters and symbols, to pass through a curing apparatus which is irradiated with ultraviolet light.

The ultraviolet light is irradiated in the curing apparatus may irradiate for about 2 seconds to about 10 seconds, and has an intensity of about 100 mW/cm2 to about 400 mW/cm2, and a quantity of light of about 500 mJ/cm2 to about 2500 mJ/cm2.

When the printed layer is printed in two tones or more, the printing process and the curing process may be repeatedly performed number of times corresponding to number of printing tones after completing a first curing process.

In the urethane coating process, the solvent-type urethane paint may be any one selected from among melamine, alkyd, or acryl, and may be applied to a surface of the panel through a spraying method.

In the printing process, the monomer and oligomer included in the UV printing ink may include any one of epoxy-based resins.

### Advantageous Effects of Invention

According to a panel for a home appliance and a manufacturing method thereof according to embodiments, a printed layer may be formed on a panel of a home appliance which has a urethane coated layer with various colors, by printing letters and symbols using a UV printing ink which includes a monomer, an oligomer, and a photoinitiator, and may be cured through a cationic curing method. Accordingly, there is a merit in that a printed layer may be formed which is quickly cured on a urethane coated layer having low surface energy and has good adhesiveness.

Also, since UV printing is able to be performed on a urethane coated layer, there is a merit in that the urethane coating which has various colors and good durability may be applied, and also a printed layer having chemical resistance may be applied.

Such improvement in durability and chemical resistance makes it possible to prevent the printed layer from being erased or separated due to deterioration.

Also, a printed layer is formed through UV printing which has a remarkably shorter curing time than solvent-type ink, so that effect of improving productivity may be expected.

### Brief Description of Drawings

Fig. 1 is a perspective view of a home appliance according to an embodiment.
Fig. 2 is a front view of a control panel according to an embodiment.
Fig. 3 is a front view of a detergent drawer according to an embodiment.
Fig. 4 is a cross-sectional view of a panel according to an embodiment.
Fig. 5 is a block diagram sequentially illustrating a manufacturing process of the panel.

### Best Mode for Carrying out the Invention

Hereinafter, specific embodiments will be described in detail with reference to the accompanying drawings. The spirit and scope of the present disclosure, however, shall not be construed as being limited to embodiments provided herein. Rather, it will be apparent that other embodiments that fall within the spirit and scope of the present disclosure may easily be derived through adding, modifying, and deleting elements herein.

That is, although a washing machine from among various home appliances is exemplified for convenience in the embodiments, the present disclosure is not limited to such a configuration, and may be applied to any home appliance in which a printed layer is formed on an exterior panel thereof.

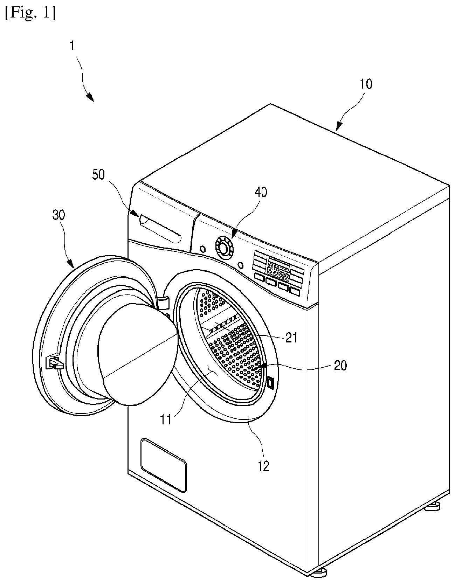

Fig. 1 is a perspective view illustrating a washing machine according to an embodiment.

Referring to Fig. 1, a washing machine 1 according to an embodiment includes: a cabinet 10 defining an appearance thereof; a drum 20 which is rotatably disposed inside the cabinet 10 and into which laundry is inputted; a lifter 21 which is disposed on an inner surface of the drum 20 and scoops up the laundry so that the laundry is dropped by gravity from a predetermined height; and a motor (not shown) which is disposed at a rear portion of the drum and generates rotation power of the drum 20.

A cabinet cover 12 having a laundry taking-in/out entrance 11 at a central portion thereof is mounted on a front surface of the cabinet 10, and a door 30 opening/closing the laundry taking-in/ out entrance 11 is rotatably mounted on the cabinet cover 12.

Also, a control panel 40 is disposed at an upper portion of the front surface of the cabinet 10. The control panel 40 may include a plurality of buttons 41 or a knob 42 for controlling operations of the washing machine 1, and a display 43 for displaying operating states of the washing machine 1.

In addition, a detergent drawer 50 may be further included at the upper portion of the front surface of the cabinet 10. The detergent drawer 50 is disposed at a side of the control panel 40. The detergent drawer 50 may be formed in such a way that a portion in which detergent is inputted and stored, and a portion exposed towards the front surface of the cabinet are integrally formed, or formed in such a way that a portion defining at least a part of the front surface is formed as a separate part and coupled to the portion in which detergent is inputted and stored.

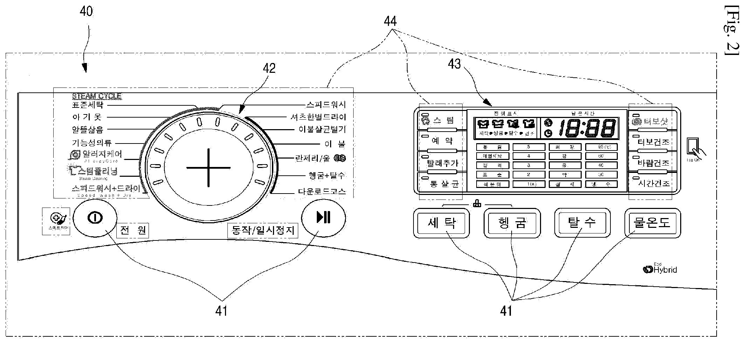

Fig. 2 is a front view of a control panel according to an embodiment.

Referring to Fig. 2, a plurality of buttons 41 and a knob 42 included in the control panel 40 are disposed such that the operation and the selection of operations of the washing machine 1 may be easily performed, and the display 43 displays the operating states and the controlling information of the washing machine 1 to allow a user to check them.

Meanwhile, for convenience of operation of the buttons 41 and the knob 41 included in the control panel 40 and for acquisition of information through the display 43, a plurality of letters and symbols 44 are printed. Accordingly, a user refers to such letters and symbols 44 when operating the buttons 41 or the knob 42, and easily checks the information displayed through the display 43.

For example, menus for laundry courses are displayed around the knob 42 that is rotatably operated, operations which are performed when corresponding buttons are operated are displayed on the buttons 41, and other additional functions may be displayed around or at both left and right sides of the display 43.

The letters and symbols 44 may be printed on the injection-molded control panel 40 by using a UV printing ink, and a printed layer 130 is formed on the control panel. Detailed descriptions about the printed layer will be given below in more detail.

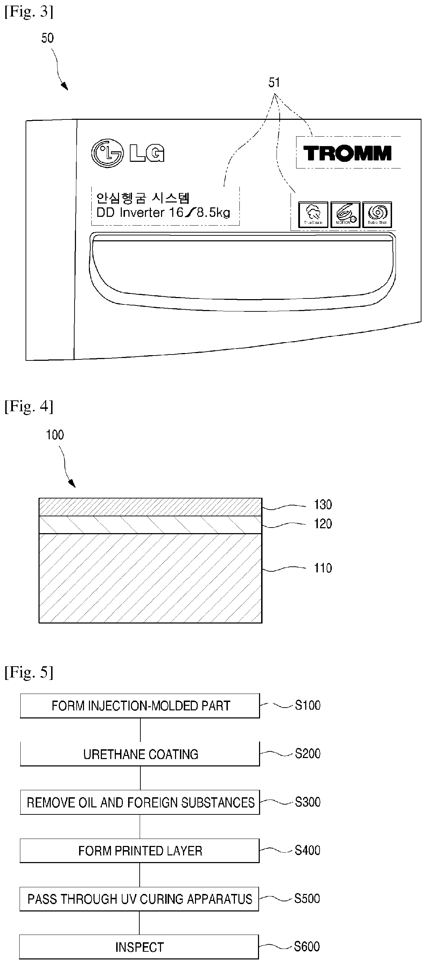

Fig. 3 is a front view of a detergent drawer according to an embodiment.

Referring to Fig. 3, the detergent drawer 50 is provided to supply the washing machine 1 with detergent, and is configured in a drawer shape which may be pulled out/pushed into the cabinet 10. Also, at least a front surface of the detergent drawer 50 is exposed to the outside when being completely pushed into, and may be flush with a front surface of the control panel 40 at a side of the control panel 40.

Meanwhile, since the front surface of the detergent drawer 50 defines the appearance of the washing machine 1, the front surface of the detergent drawer 50 would be considered to have the same configuration as the panel 100. Also, the front surface of the detergent drawer 50 may be formed as a separate member to be coupled to the other portion of the detergent drawer 50, and the entire detergent drawer 50 may also be integrally formed.

Various symbols and letters 51 may be also printed on the front surface of the detergent drawer 50, and a printing method used herein may be performed through the same method as that of the above-described control panel 40.

The detergent drawer 50 does not directly involve in control of an overall operation of the washing machine 1. Since only pull-out/push-in operations for inputting the detergent are simply performed, the letters or symbols 51 printed on the detergent drawer 50 may mainly include a model name, a capacity, or other information which does not directly relate to the control of operation of the washing machine.

Meanwhile, such letters and symbols 51 may be formed, on the front surface of the detergent drawer 50, by a printed layer which is UV-printed by using a UV printing ink on a urethane coated layer which is coated with solvent-type urethane paint. Detailed description about this will be given below.

As described above, although a panel for a home appliance according to embodiments representatively has a plate-shaped panel structure like the control panel 40, but is not limited thereto. Thus, the panel may be defined as those commonly referred to as a part, such as the detergent drawer 50, which may define an appearance and on which symbols and letters 44 and 51 may be printed.

Hereinafter, a cross-sectional structure according to an embodiment will be described.

Fig. 4 is a cross-sectional view of a panel according to an embodiment.

Referring to Fig. 4, a panel 100 according to an embodiment may include: an injection-molded part 110 forming an overall outward shape; a urethane coated layer 120 formed by coating an upper surface of the injection-molded part 110 with solvent-type urethane paint; and a printed layer 130 formed by using a UV printing ink to print symbols 44 and letters 51, shown to the outside, on an upper surface of the urethane coated layer 120.

Specifically, the injection-molded part 110 defines the shape of the panel 100, and may be formed of a plastic material such as an acrylonitrile-butadiene-styrene (ABS) resin. The injection-molded part 110 may be variously formed in a plate shape or a drawer shape, etc., according to a counterpart, and formed such that a surface, on which the printed layer 130 is formed, is provided at one side surface thereof exposed to the outside.

A urethane coated layer 120 is formed by applying solvent-type urethane paint to a surface of the injection-molded part 110, that is, a front surface of the injection-molded part, which is exposed to the outside. The urethane coated layer 120 allows a surface color of the injection-molded part 110 to be diversified by enabling various colors to be realized according to added paint, and allows the panel 100 to have various color variations.

Also, the surface of the injection-molded part 110 may be protected, the appearance of the panel 100 may be improved by adding pearl flakes to acquire a sparkling texture, and the injection-molded part 110 is allowed to have various colors and textures.

The urethane coated layer 120 may be formed by using solvent-type urethane paint including any one of melamine, alkyd, and acryl, and a conformal and uniform coating may be formed by applying the solvent-type urethane paint to a surface of the injection-molded part 110 through a spray method.

Meanwhile, the printed layer 130 may be formed on the surface of the urethane coated layer 120 by printing specific letters and symbols 44 and 51 through UV printing by using a UV printing ink.

Here, since the urethane coated layer 120 has a characteristic of poor reactivity due to its smooth surface f and low surface energy, the printed layer 130 is cured through a cationic curing method so as to be efficiently printed on the surface of the urethane coated layer 120 having a low surface energy. Thus the printed layer 130 may efficiently adhered to and may be cured even on the urethane coated layer 120 having a low surface energy.

More specifically, the UV printing ink include, as main components, a monomer, an oligomer, and a photoinitiator, and includes a curing accelerator, an anti-foaming agent, a dispersing agent, silica, and a pigment.

Here, about 10 wt% to about 25 wt% of the monomer may be included based on the total weight of ink so that a cationic curing is mainly promoted on a monofunctional monomer having many chemically reactive sites so as to overcome disadvantages of cationic curing materials which are epoxy-based and has a low reaction rate in general.

Also, the oligomer is included to enhance chemical resistance, epoxy acrylate may be used to improve adhesiveness on a painted surface having low surface energy, and about 25 wt% to about 50 wt% of the oligomer may be included based on the total weight of ink.

Also, about 4.5 wt% to 5.5 wt% of photoinitiator is included based on the total weight of ink to cure the oligomer, and a phosphoric acid-based or iodine-based photoinitiator, which may evenly react at an optical wavelength or short wavelength, may be selected as the photoinitiator to cure the inside of a coloring ink.

Accordingly, when ultraviolet light is irradiated to form a printed layer, the adhesiveness and the curing may be promoted by the oligomer and the photoinitiator, so that the cationic curing is promoted and thus the printed layer 130 may be quickly and efficiently cured onto the surface of the urethane coated layer 120, which has low surface energy.

Meanwhile, the curing accelerator is added to promote curing property, and is added in an amount of about 4 wt% to about 6 wt% based on the total weight of ink, so that a time for checking the quality reliability of the printed layer may be reduced through promotion of curing property.

The anti-foaming agent is included to realize a good appearance by removing foam generated during a curing process for forming the printed layer 130, and about 0.1 wt% of a silicon-type anti-foaming agent having a high activity may be added based on the total weight.

The dispersing agent is included to uniformly and stably disperse particles of a pigment by being evenly spread in a resin, such as a monomer and an oligomer, and may be added in an amount of about 1 wt% based on the total weight of the ink.

The silica is included to increase viscosity so that the UV printing ink has a viscosity suitable for printing, and about 8 wt% to about 13 wt% of non-coating-type silica may be added based on the total weight of ink.

In addition, a balance amount of pigment except the above-mentioned components may be included. The pigment determines the colors of the printed letters and symbols 44 and 51, and may realize specific colors according to added pigments.

Here, the content of the pigment may be determined according to the selected colors. Particularly, when the content of the pigment is too high, the transmission of UV light becomes difficult and an appropriate curing may not be performed, so that the content of the pigment may be determined at a level where the color of the urethane coated layer 120 is hidden so as not to be transmitted.

That is, in the case of a dark series color, since the color hiding of the urethane coated layer 120 may be relatively easy and the transmission of UV light may be difficult, the content of the pigment may be designed as a relatively low ratio. Also, in the case of a bright series color, since the color hiding of the urethane coated layer 120 is relatively difficult and the transmission of UV light is easy, the content of the pigment may be designed as a relatively high ratio.

Meanwhile, when the content of the pigment is determined, the contents of the other components may be determined according to respective ratios. The colors of the letters and symbols formed on the printed layer 130 may be accurately realized by allowing the color of the urethane coated layer 120 not to be shown up. Also, the printed layer 130 may be efficiently cured and adhere to the urethane coated layer 120 by allowing UV light to be sufficiently transmitted.

Hereinafter, a method for manufacturing a panel for a home appliance according to embodiments which has the above-described configuration will be described with reference to the accompanying drawings.

Fig. 5 is a block diagram sequentially illustrating a manufacturing process of the panel.

Referring to Fig. 5, to manufacture a panel 100 for a home appliance according to embodiments, first, an injection-molded part 110 defining a shape of the panel 100 is injection-molded in a required shape by using ABS material. Then, the injection-molded part 110 completed with the injection molding is subjected to a degreasing process in which a foreign substance or oil is removed, if necessary.

### [Injection-molding process (S100)]

The urethane coated layer 120 is formed on a surface of the injection-molded part 110. The urethane coated layer 120 may be formed by spraying solvent-type urethane paint for plastics, and formed to a uniform thickness over an entire surface of the injection-molded part 110.

According to selection of paint which forms the urethane coated layer 120, various colors and textures of the panel 100 may be realized, and if necessary, an additional process for expressing various textures may be performed on the urethane coated layer 120.

### [urethane coating process (S200)]

Next, after the solvent-type urethane paint is completely dried, oil or foreign substances remaining in the urethane coated layer 120 are removed. To remove the oil and the foreign substances, the surface of the urethane coated layer 120 may be cleaned by using isopropyl alcohol, and the surface of the urethane coated layer 120 is treated so that a printing process to be subsequently performed may be performed well.

### [degreasing process (S300)]

On an upper surface of the urethane coated layer 120 completed with the degreasing process, the printed layer 130 is formed through screen printing. The printed layer 130 is printed through a cationic curing method such that letters and symbols 44 and 51 are formed at desired positions of the panel 100 by using a UV printing ink, which has components including a monomer, an oligomer, a photoinitiator, a pigment, etc..

### [printing process (S400)]

The panel 100 which is printed through the printing process may be exposed to UV light irradiated in a UV curing apparatus while passing through the UV curing apparatus. Through such a process, the printed layer 130 may be quickly and firmly cured on a surface of the urethane coated layer 120.

Also, the UV light irradiated in the UV curing apparatus may have the intensity of about 100 mW/cm2 to about 400 mW/cm2, and the quantity of light of about 500 mJ/ cm2 to 2500 mJ/cm2 for about 2 seconds to 4 seconds, so that the printed layer 130 is cured.

Meanwhile, when the colors of the letters and symbols 44 and 51 printed on the panel 100 are diversified, the curing process is firstly performed, a printing process for a second tone is then performed again, and finally the curing process is performed again. That is, the curing process is additionally performed the same number of times as the number of tones of the printed layer 130. [curing process (S500)]

The printed layer 130 of the panel 100 completed with the curing process may be completely cured while being transferred for inspection without an additional drying operation. After the curing process, the transferred panel 100 is checked for a printing state through inspection, and the panels satisfying inspection criteria are allowed to be immediately shipped. [inspection process (S600)]

Various variations and modifications are possible in the component parts and/or arrangements of the subject combination arrangement within the ambit of the appended claims.

### Industrial Applicability

According to embodiments, since a panel for a home appliance may have improved durability and chemical resistance, the panel has high industrial applicability.

## Claims

1. A panel (100) for a home appliance (1) which defines an appearance of the home appliance (1), the panel (100) **characterized by**:
an injection-molded part (110) which is formed through an injection-molding by using a plastic material so as to define a shape of the panel (100);
a urethane coated layer (120) which is formed on a surface of the injection-molded part (110) and is formed by using a solvent-type urethane paint so as to define an exterior of the panel (100) for a home appliance (1); and
a printed layer (130) which is formed on a surface of the urethane coated layer (120), and is formed by being printed by using a UV printing ink which includes a monomer, an oligomer, a photoinitiator, and a pigment and is cured through a cationic curing method.

2. The panel according to claim 1, wherein the printed layer (130) comprises letters and symbols for assisting in controlling and checking operation states of the home appliance (1).

3. The panel according to claim 1, wherein the solvent-type urethane paint comprises any one of melamine, alkyd, and acryl.

4. The panel according to claim 1, wherein the UV printing ink further comprises a curing accelerator, an anti-foaming agent, a dispersing agent, and silica.

5. The panel according to claim 1, wherein the UV printing ink has a pigment content which is determined in a range such that a color of the urethane coated layer is hidden, and ultraviolet light irradiated for curing transmits the UV printing ink.

6. The panel according to claim 5, wherein the UV printing ink comprises, based on the total weight of the ink, about 10 wt% to about 25 wt% of the monomer, about 25 wt% to about 50 wt% of the oligomer, about 4.5 wt% to about 5.5 wt% of the photoinitiator, about 4 wt% to 6 wt% of the curing accelerator, about 0.1 wt% the anti-foaming agent, about 1 wt% of the dispersing agent, about 8 wt% to 13 wt% of the silica, and the balance being the pigment.

7. The panel according to claim 1, wherein the monomer and the oligomer comprise an epoxy-based resin.

8. The panel according to claim 1, wherein the photoinitiator is a phosphoric acid-based or an iodine-based material.

9. A method for manufacturing a panel of a home appliance, the method **characterized by**:
an injection-molding process (S100) of forming an injection-molded part (110) made of a plastic material, which forms a panel (100) defining at least a portion of an appearance of a home appliance (1);
a urethane coating process (S200) of forming solvent-type urethane paint to form an exterior of the panel on a surface of the injection-molded part (110);
a printing process (S400) of printing letters and symbols through a screen printing method on a surface of the urethane coated layer (120) by using a UV printing ink which includes a monomer and an oligomer, a photoinitiator, and a pigment; and
a curing process (S500) of curing the UV printing ink through a cationic curing method, by allowing the panel (100), on which the printed layer (130) is formed by printing letters and symbols, to pass through a curing apparatus which is irradiated with ultraviolet light.

10. The method according to claim 9, wherein the ultraviolet light is irradiated in the curing apparatus for about 2 seconds to about 10 seconds, and has an intensity of about 0.100 mW/cm2 to about 400 mW/cm2, and a quantity of light of about 500 mJ/cm2 to about 2500 mJ/cm2.

11. The method according to claim 9, wherein, when the printed layer (130) is printed to have two tones or more, the printing process (S400) and the curing process (S500) are repeatedly performed number of times corresponding to number of printing tones after completing a first curing process (S500).

12. The method according to claim 9, wherein in the urethane coating process (S200), the solvent-type urethane paint is any one selected from melamine, alkyd, and acryl, and is applied to a surface of the panel through a spraying method.

13. The method according to claim 9, wherein in the printing process (S400), the monomer and oligomer included in the UV printing ink comprise any one of epoxy-based resins.

## Patentansprüche

1. Tafel (100) für ein Haushaltsgerät (1), die ein Aussehen des Haushaltsgeräts (1) definiert, wobei die Tafel (100) **gekennzeichnet ist durch**:
ein Spritzgussteil (110), das **durch** einen Spritzguss unter Verwendung eines Kunststoffmaterials gebildet ist, um eine Form der Tafel (100) zu definieren;
eine urethanbeschichtete Schicht (120), die auf einer Oberfläche des Spritzgussteils (110) gebildet ist und die unter Verwendung eines Urethanlacks vom Lösungsmitteltyp gebildet ist, um ein Äußeres der Tafel (100) für ein Haushaltsgerät (1) zu definieren; und
eine gedruckte Schicht (130), die auf einer Oberfläche der urethanbeschichteten Schicht (120) gebildet ist und die dadurch gebildet worden ist, dass sie unter Verwendung einer UV-Drucktinte, die ein Monomer, ein Oligomer, einen Fotoinitiator und ein Pigment enthält, gedruckt und **durch** ein kationisches Härtungsverfahren gehärtet worden ist.

2. Tafel nach Anspruch 1, wobei die gedruckte Schicht (130) Buchstaben und Symbole zur Unterstützung beim Steuern und Prüfen von Betriebszuständen des Haushaltsgeräts (1) umfasst.

3. Tafel nach Anspruch 1, wobei der Urethanlack vom Lösungsmitteltyp Melamin oder Alkydharz oder Acryl umfasst.

4. Tafel nach Anspruch 1, wobei die UV-Drucktinte ferner einen Härtungsbeschleuniger, einen Schaumdämpfer, ein Dispergiermittel und Siliciumdioxid umfasst.

5. Tafel nach Anspruch 1, wobei die UV-Drucktinte einen Pigmentgehalt aufweist, der in einem Bereich bestimmt ist, dass eine Farbe der urethanbeschichteten Schicht verborgen ist, und Ultraviolettlicht, mit dem zum Härten bestrahlt wird, durch die UV-Drucktinte durchgeht.

6. Tafel nach Anspruch 5, wobei die UV-Drucktinte bezogen auf das Gesamtgewicht der Tinte etwa 10 Gew.-% bis etwa 25 Gew.-% des Monomers, etwa 25 Gew.-% bis etwa 50 Gew.-% des Oligomers, etwa 4,5 Gew.-% bis etwa 5,5 Gew.-% des Fotoinitiators, etwa 4 Gew.-% bis 6 Gew.-% des Härtungsbeschleunigers, etwa 0,1 Gew.-% des Schaumdämpfers, etwa 1 Gew.-% des Dispergiermittels, etwa 8 Gew.-% bis etwa 13 Gew.-% des Siliciumdioxids umfasst, und wobei der Rest das Pigment ist.

7. Tafel nach Anspruch 1, wobei das Monomer und das Oligomer ein Harz auf Epoxidgrundlage umfassen.

8. Tafel nach Anspruch 1, wobei der Fotoinitiator ein Material auf Phosphorsäuregrundlage oder auf Iodgrundlage ist.

9. Verfahren zur Herstellung einer Tafel eines Haushaltsgeräts, wobei das Verfahren **gekennzeichnet ist durch**:
einen Spritzgussprozess (S100) zum Bilden eines Spritzgussteils (110), das aus einem Kunststoffmaterial hergestellt ist, das eine Tafel (100) bildet, die wenigstens einen Teil eines Aussehens eines Haushaltsgeräts (1) definiert;
einen Urethanbeschichtungsprozess (S200) zum Bilden eines Urethanlacks vom Lösungsmitteltyp zum Bilden eines Äußeren der Tafel auf einer Oberfläche des Spritzgussteils (110);
einen Druckprozess (S400) zum Drucken von Buchstaben und Symbolen **durch** ein Siebdruckverfahren auf einer Oberfläche der urethanbeschichteten Schicht (120) unter Verwendung einer UV-Drucktinte, die ein Monomer und ein Oligomer, einen Fotoinitiator und ein Pigment enthält; und
einen Härtungsprozess (S500) zum Härten der UV-Drucktinte **durch** ein kationisches Härtungsverfahren, indem ermöglicht wird, dass die Tafel (100), auf der **durch** Drucken von Buchstaben und Symbolen die gedruckte Schicht (130) gebildet ist, **durch** eine Härtungsvorrichtung geht, die mit Ultraviolettlicht bestrahlt wird.

10. Verfahren nach Anspruch 9, wobei das Ultraviolettlicht etwa 2 Sekunden bis etwa 10 Sekunden in die Härtungsvorrichtung eingestrahlt wird und eine Intensität von etwa 0,100 mW/cm² bis etwa 400 mW/cm² aufweist und eine Menge des Lichts von etwa 500 mJ/cm² bis etwa 2500 mJ/cm² aufweist.

11. Verfahren nach Anspruch 9, wobei, wenn die gedruckte Schicht (130) in der Weise gedruckt wird, dass sie zwei oder mehr Töne aufweist, der Druckprozess (S400) und der Härtungsprozess (S500) nach Abschluss eines ersten Härtungsprozesses (S500) so oft, wie es der Anzahl der Drucktöne entspricht, wiederholt ausgeführt werden.

12. Verfahren nach Anspruch 9, wobei in dem Urethanbeschichtungsprozess (S200) der Urethanlack vom Lösungsmitteltyp irgendeiner ist, der aus Melamin, Alkydharz und Acryl gewählt wird und durch ein Sprühverfahren auf eine Oberfläche der Tafel aufgetragen wird.

13. Verfahren nach Anspruch 9, wobei in dem Druckprozess (S400) das Monomer und das Oligomer, die in der UV-Drucktinte enthalten sind, irgendeines der Harze auf Epoxidgrundlage umfassen.

## Revendications

1. Panneau (100) pour un appareil domestique (1) qui définit un aspect de l'appareil domestique (1), le panneau (100) étant **caractérisé par** :
une partie moulée par injection (110) qui est formée par un moulage par injection en utilisant une matière plastique de manière à définir une forme du panneau (100) ;
une couche revêtue d'uréthane (120) qui est formée sur une surface de la partie moulée par injection (110) et est formée en utilisant une peinture d'uréthane de type solvant de manière à définir un extérieur du panneau (100) pour un appareil domestique (1) ; et
une couche imprimée (130) qui est formée sur une surface de la couche revêtue d'uréthane (120), et est formée en étant imprimée en utilisant une encre d'impression UV qui inclut un monomère, un oligomère, un photo-initiateur et un pigment et est durcie par un procédé de durcissement cationique.

2. Panneau selon la revendication 1, dans lequel la couche imprimée (130) comporte des lettres et des symboles pour aider à commander et vérifier des états de fonctionnement de l'appareil domestique (1).

3. Panneau selon la revendication 1, dans lequel la peinture d'uréthane de type solvant comporte un élément quelconque parmi une mélamine, un alkyde et un acryle.

4. Panneau selon la revendication 1, dans lequel l'encre d'impression UV comporte en outre un accélérateur de durcissement, un agent antimoussant, un agent dispersant et une silice.

5. Panneau selon la revendication 1, dans lequel l'encre d'impression UV a une teneur en pigment qui est déterminée dans un intervalle tel qu'une couleur de la couche revêtue d'uréthane est cachée, et une lumière ultraviolette projetée pour le durcissement transmet l'encre d'impression UV.

6. Panneau selon la revendication 5, dans lequel l'encre d'impression UV comporte, sur la base du poids total de l'encre, d'environ 10 % en poids jusqu'à environ 25 % en poids du monomère, d'environ 25 % en poids jusqu'à environ 50 % en poids de l'oligomère, d'environ 4,5 % en poids jusqu'à environ 5,5 % en poids du photo-initiateur, d'environ 4 % en poids jusqu'à 6 % en poids de l'accélérateur de durcissement, environ 0,1 % en poids de l'agent antimoussant, environ 1 % en poids de l'agent dispersant, d'environ 8 % en poids jusqu'à 13 % en poids de la silice, et le reste étant le pigment.

7. Panneau selon la revendication 1, dans lequel le monomère et l'oligomère comportent une résine à base d'époxyde.

8. Panneau selon la revendication 1, dans lequel le photo-initiateur est un matériau à base d'acide phosphorique ou à base d'iode.

9. Procédé pour fabriquer un panneau d'un appareil domestique, le procédé étant **caractérisé par** :
un processus de moulage par injection (S100) consistant à former une partie moulée par injection (110) constituée d'une matière plastique, qui forme un panneau (100) définissant au moins une partie d'un aspect d'un appareil domestique (1) ;
un processus de dépôt d'uréthane (S200) consistant à former une peinture d'uréthane de type solvant pour former un extérieur du panneau sur une surface de la partie moulée par injection (110) ;
un processus d'impression (S400) consistant à imprimer des lettres et des symboles par un procédé de sérigraphie sur une surface de la couche revêtue d'uréthane (120) en utilisant une encre d'impression UV qui inclut un monomère et un oligomère, un photo-initiateur et un pigment ; et
un processus de durcissement (S500) consistant à durcir l'encre d'impression UV par un procédé de durcissement cationique, en permettant au panneau (100), sur lequel la couche imprimée (130) est formée en imprimant des lettres et des symboles, de passer à travers un appareil de durcissement dans lequel est projetée une lumière ultraviolette.

10. Procédé selon la revendication 9, dans lequel la lumière ultraviolette est projetée dans l'appareil de durcissement pendant d'environ 2 secondes à environ 10 secondes, et a une intensité d'environ 0,100 mW/cm² à environ 400 mW/cm², et une quantité de lumière d'environ 500 mJ/cm² à environ 2 500 mJ/cm².

11. Procédé selon la revendication 9, dans lequel, lorsque la couche imprimée (130) est imprimée pour avoir deux teintes ou plus, le processus d'impression (S400) et le processus de durcissement (S500) sont exécutés de manière répétée pendant un nombre de fois correspondant au nombre de teintes d'impression après l'achèvement d'un premier processus de durcissement (S500).

12. Procédé selon la revendication 9, dans lequel, dans le processus de revêtement d'uréthane (S200), la peinture d'uréthane de type solvant est un élément quelconque choisi parmi une mélamine, un alkyde et un acryle, et est appliquée sur une surface du panneau par un procédé de pulvérisation.

13. Procédé selon la revendication 9, dans lequel, dans le processus d'impression (S400), le monomère et l'oligomère inclus dans l'encre d'impression UV comportent l'une quelconque des résines à base d'époxyde.
